# FASCICULE DE BREVET EUROPEEN

(11) **EP 3 661 776 B1**
(45) Date de publication et mention de la délivrance du brevet: **05.01.2022**
(21) Numéro de dépôt: 18755874.7
(22) Date de dépôt: 26.07.2018
(51) Int. Cl.: B60H 1/00, F25B 5/04, B60H 1/32

(54) **PROCÉDÉ DE GESTION D'UN CIRCUIT DE CLIMATISATION INVERSIBLE INDIRECT DE VÉHICULE AUTOMOBILE**
INDIREKTER UMKEHRBARER KLIMAANLAGENKREISLAUF FÜR EIN KRAFTFAHRZEUG
INDIRECT REVERSIBLE AIR-CONDITIONING CIRCUIT FOR A MOTOR VEHICLE

(30) Priorité: 04.08.2017 FR 1757507
(43) Date de publication de la demande: 10.06.2020
(73) Titulaire: Valeo Systemes Thermiques, 78322 Le Mesnil Saint-Denis (FR)
(72) Inventeur: BENOUALI, Jugurtha, 78322 Le Mesnil Saint Denis Cedex (FR); BEAUVIS, Régis, 78322 Le Mesnil Saint Denis Cedex (FR); LIU, Jin-Ming, 78322 Le Mesnil Saint Denis Cedex (FR); PORTO, Muriel, 78322 Le Mesnil Saint Denis Cedex (FR)
(74) Mandataire: Valeo Systèmes Thermiques
(86) Numéro de dépôt international: PCT/FR2018/051926
(87) Numéro de publication internationale: WO 2019/025705

(56) Documents cités:
- EP-A1- 2 933 586
- JP-A- 2014 163 628
- US-A1- 2004 134 217

## Description

L'invention se rapporte au domaine des véhicules automobiles et plus particulièrement à un circuit de climatisation de véhicule automobile et son procédé de gestion en mode pompe à chaleur.

Les véhicules automobiles actuels comportent de plus en plus souvent un circuit de climatisation. Généralement, dans un circuit de climatisation « classique », un fluide réfrigérant passe successivement dans un compresseur, un premier échangeur de chaleur, appelé condenseur, placé en contact avec un flux d'air extérieur au véhicule automobile pour libérer de la chaleur, un dispositif de détente et un deuxième échangeur de chaleur, appelé évaporateur, placé en contact avec un flux d'air intérieur du véhicule automobile pour le refroidir.

Il existe également des architectures de circuit de climatisation plus complexes qui permettent d'obtenir un circuit de climatisation inversible, c'est-à-dire qu'il peut utiliser un mode de fonctionnement pompe à chaleur dans lequel il est apte à absorber de l'énergie calorifique dans l'air extérieur au niveau du premier échangeur de chaleur, appelé alors évapo-condenseur, et la restituer dans l'habitacle notamment au moyen d'un troisième échangeur de chaleur dédié.

Cela est possible notamment en utilisant un circuit de climatisation indirect. On entend par indirect ici que le circuit de climatisation comporte deux boucles de circulation de deux fluides distincts (par exemple un fluide réfrigérant d'une part et de l'eau glycolée d'autre part) afin d'effectuer les différents échanges de chaleur.

Le circuit de climatisation comprend ainsi une première boucle de fluide réfrigérant dans laquelle circule un fluide réfrigérant, une deuxième boucle de fluide caloporteur dans laquelle circule un fluide caloporteur, et un échangeur de chaleur bifluide agencé conjointement sur la première boucle de fluide réfrigérant et sur la deuxième boucle de fluide caloporteur, de façon à permettre les échanges de chaleur entre lesdites boucles.

Un tel circuit de climatisation permet une utilisation selon différents modes de fonctionnement notamment dans un mode déshumidification totale. Cependant, lors de ce mode de fonctionnement, il est possible que la quantité d'énergie calorifique générée soit importante et donc que le flux d'air arrivant dans l'habitacle soit trop chaud et nuise au confort des occupants et n'assure plus sa fonction de déshumidification. Cela est particulièrement le cas lorsque le circuit de climatisation est également utilisé pour refroidir des éléments tels que des batteries, de l'électronique de puissance ou alors un ou plusieurs moteurs électriques.

EP2933586A1 divulgue un procédé de gestion d'un circuit de climatisation indirect inversible conforme au préambule de la revendication 1.

Un des buts de la présente invention est donc de remédier au moins partiellement aux inconvénients de l'art antérieur et de proposer un procédé de gestion d'un circuit de climatisation inversible amélioré notamment en mode déshumidification totale.

La présente invention concerne donc un procédé de gestion d'un circuit de climatisation indirect inversible pour véhicule automobile comportant une première boucle de fluide réfrigérant dans laquelle circule un fluide réfrigérant et comprenant un premier échangeur de chaleur bifluide agencé conjointement sur la première boucle de fluide réfrigérant et sur une deuxième boucle de fluide caloporteur dans laquelle circule un premier fluide caloporteur, le premier échangeur de chaleur bifluide étant disposé de façon à permettre les échanges de chaleur entre la première boucle de fluide réfrigérant et la deuxième boucle de fluide caloporteur,
la première boucle de fluide réfrigérant comprenant :
- un compresseur,
- le premier échangeur de chaleur bifluide, disposé en aval dudit compresseur,
- un premier dispositif de détente,
- un premier échangeur de chaleur étant destiné à être traversé par un flux d'air intérieur au véhicule automobile,
- un deuxième dispositif de détente,
- un deuxième échangeur de chaleur étant destiné à être traversé par un flux d'air extérieur au véhicule automobile, et
- une boucle de contournement du deuxième échangeur de chaleur,
- un dispositif de redirection du fluide réfrigérant en provenance du premier échangeur de chaleur vers le deuxième échangeur de chaleur ou vers la boucle de contournement,

ledit circuit comportant un capteur de température du flux d'air intérieur en sortie du premier échangeur de chaleur,
ledit circuit étant apte à fonctionner selon un mode de déshumidification totale dérivé d'un mode pompe à chaleur, dans lequel le flux d'air intérieur est refroidi au niveau du premier échangeur de chaleur puis réchauffé au niveau d'un radiateur interne de la deuxième boucle de fluide caloporteur, avant d'arriver dans l'habitacle et dans lequel le premier et le deuxième échangeurs de chaleurs sont destinés à fonctionner simultanément,
le circuit de climatisation inversible indirect comportant une unité centrale de contrôle relié audit capteur de température du flux d'air intérieur et apte à piloter le dispositif de redirection du fluide réfrigérant,
lorsque le circuit de climatisation indirect est en mode de déshumidification totale, l'unité centrale de contrôle commande le dispositif de redirection du fluide réfrigérant de sorte que :
   - si la température mesurée au niveau du capteur de température du flux d'air intérieur est supérieure ou égale à T + Y1, le dispositif de redirection du fluide réfrigérant permet le passage du fluide réfrigérant dans la boucle de contournement, dans lequel T est une valeur consigne de température du flux d'air intérieur au niveau du capteur de température et Y1 un différentiel de température compris entre 0 et 3 °C,
   - si la température mesurée au niveau du capteur de température du flux d'air intérieur est inférieure ou égale à T - Y2, le dispositif de redirection du fluide réfrigérant empêche le passage du fluide réfrigérant dans la boucle de contournement, dans lequel T est une valeur consigne de température du flux d'air intérieur au niveau du capteur de température et Y2 un différentiel de température compris entre 0 et 3 °C.

Selon un aspect de l'invention, le dispositif de redirection du fluide réfrigérant comporte une première vanne d'arrêt disposée sur la boucle de contournement.

Selon un autre aspect de l'invention, la première vanne d'arrêt est une vanne tout ou rien.

Selon un autre aspect de l'invention, la première vanne d'arrêt est une vanne proportionnelle.

Selon un autre aspect de l'invention, l'unité centrale de contrôle détermine le régime du compresseur de sorte que la température mesurée du flux d'air intérieur en sortie du premier échangeur de chaleur corresponde à la température consigne dudit flux d'air intérieur.

Selon un autre aspect de l'invention, la première boucle de fluide réfrigérant comporte une conduite de dérivation comportant un troisième dispositif de détente disposé en amont d'un deuxième échangeur de chaleur bifluide, ledit deuxième échangeur de chaleur bifluide étant également agencé conjointement sur une boucle de gestion thermique secondaire dans laquelle circule un deuxième fluide caloporteur, ladite boucle de dérivation étant disposée entre un premier point de jonction disposé en aval du premier échangeur de chaleur bifluide, entre ledit premier échangeur de chaleur bifluide et le premier dispositif de détente et un deuxième point de jonction disposé en amont compresseur, entre le troisième échangeur de chaleur et ledit compresseur.

Selon un autre aspect de l'invention, lorsque le fluide réfrigérant traverse la conduite de dérivation, l'unité centrale de contrôle commande le dispositif de redirection du fluide réfrigérant en fonction de la température mesurée du flux d'air intérieur en sortie du premier échangeur de chaleur et que l'unité centrale de contrôle détermine le régime du compresseur de sorte que la pression du fluide réfrigérant en sortie du premier échangeur de chaleur corresponde à la température consigne du deuxième fluide caloporteur en sortie du deuxième échangeur de chaleur bifluide.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un circuit de climatisation inversible indirect,
- la figure 2 montre un dispositif de détente selon un mode de réalisation alternatif,
- la figure 3 montre une représentation schématique de la deuxième boucle de fluide caloporteur du circuit de climatisation inversible indirect de la figure 1, selon un mode de réalisation alternatif,
- la figure 4 montre une représentation schématique d'un dispositif de chauffage, ventilation et/ou climatisation,
- la figure 5 montre une représentation schématique du circuit de climatisation inversible indirect de la figure 1 selon un premier mode de fonctionnement,
- la figure 6a montre une représentation schématique du circuit de climatisation inversible indirect de la figure 1 selon un deuxième mode de réalisation,
- la figure 6b montre une représentation schématique du circuit de climatisation inversible indirect de la figure 1 selon un troisième mode de réalisation,
- la figure 7 montre un diagramme de l'ouverture ou de la fermeture de la deuxième vanne d'arrêt en fonction de la température du premier fluide caloporteur,
- la figure 8 montre un diagramme de la variation de divers paramètres du circuit de climatisation inversible indirect en fonction du temps.

Sur les différentes figures, les éléments identiques portent les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent seulement à un seul mode de réalisation. De simples caractéristiques de différents modes de réalisation peuvent également être combinées et/ou interchangées pour fournir d'autres réalisations.

Dans la présente description, on peut indexer certains éléments ou paramètres, par exemple premier élément ou deuxième élément ainsi que premier paramètre et second paramètre ou encore premier critère et deuxième critère etc. Dans ce cas, il s'agit d'un simple indexage pour différencier et dénommer des éléments ou paramètres ou critères proches mais non identiques. Cette indexation n'implique pas une priorité d'un élément, paramètre ou critère par rapport à un autre et on peut aisément interchanger de telles dénominations sans sortir du cadre de la présente description. Cette indexation n'implique pas non plus un ordre dans le temps par exemple pour apprécier tel ou tel critère.

Dans la présente description, on entend par « placé en amont » qu'un élément est placé avant un autre par rapport au sens de circulation d'un fluide. A contrario, on entend par « placé en aval » qu'un élément est placé après un autre par rapport au sens de circulation du fluide.

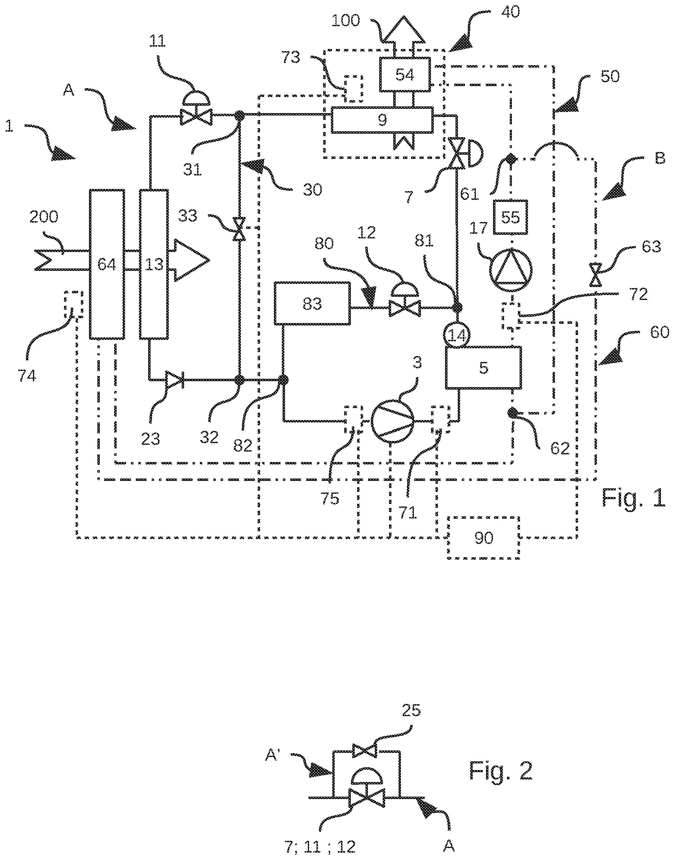

La figure 1 montre un circuit de climatisation indirect 1 pour véhicule automobile. Ce circuit de climatisation indirect 1 comporte notamment :
- une première boucle de fluide réfrigérant A dans laquelle circule un fluide réfrigérant, par exemple du R1234yf, du R134a ou tout autre fluide réfrigérant adapté à l'application,
- une deuxième boucle de fluide caloporteur B dans laquelle circule un fluide caloporteur, et
- un premier échangeur de chaleur bifluide 5 agencé conjointement sur la première boucle de fluide réfrigérant A et sur la deuxième boucle de fluide caloporteur B, de façon à permettre les échanges de chaleur entre ladite première boucle de fluide réfrigérant A et ladite deuxième boucle de fluide caloporteur B.

La première boucle de fluide réfrigérant A comporte plus particulièrement dans le sens de circulation du fluide réfrigérant :
∘ un compresseur 3,
∘ le premier échangeur de chaleur bifluide 5, disposé en aval dudit compresseur 3,
∘ un premier dispositif de détente 7,
∘ un premier échangeur de chaleur 9 étant destiné à être traversé par un flux d'air intérieur 100 au véhicule automobile,
∘ un deuxième dispositif de détente 11,
∘ un deuxième échangeur de chaleur 13 étant destiné à être traversé par un flux d'air extérieur 200 au véhicule automobile, et
∘ une boucle de contournement 30 du deuxième échangeur de chaleur 13.

La boucle de contournement 30 peut relier plus spécifiquement un premier point de raccordement 31 et un deuxième point de raccordement 32.

Le premier point de raccordement 31 est de préférence disposé, dans le sens de circulation du fluide réfrigérant, en aval du premier échangeur de chaleur 9, entre ledit premier échangeur de chaleur 9 et le deuxième échangeur de chaleur 13. Plus particulièrement, et comme illustré sur la figure 1, le premier point de raccordement 31 est disposé entre le premier échangeur de chaleur 9 et le deuxième dispositif de détente 11. Il est cependant tout à fait possible d'imaginer que le premier point de raccordement 31 soit disposé entre le deuxième dispositif de détente 11 et le deuxième échangeur de chaleur 13 du moment que le fluide réfrigérant a la possibilité de contourner ledit deuxième dispositif de détente 11 ou de le traverser sans subir de perte de pression.

Le deuxième point de raccordement 32 est quant à lui de préférence disposé en aval du deuxième échangeur de chaleur 13, entre ledit échangeur de chaleur 13 et le compresseur 3.

Afin de contrôler le passage du fluide réfrigérant au sein de la boucle de contournement 30 ou non, le circuit de climatisation indirect 1 comporte un dispositif de redirection du fluide réfrigérant en provenance du premier échangeur de chaleur 9 vers ladite boucle de contournement 30 et/ou vers le deuxième échangeur de chaleur 13. Ce dispositif de redirection du fluide réfrigérant peut notamment comporter une première vanne d'arrêt 33 disposée sur la boucle de contournement 30. Cette première vanne d'arrêt 33 peut être une vanne tout-ou-rien ou bien encore une vanne proportionnelle dont l'amplitude d'ouverture est commandée. Pour que le fluide réfrigérant ne traverse pas le deuxième échangeur de chaleur 13, le deuxième dispositif de détente 11 peut notamment comporter une fonction d'arrêt, c'est-à-dire qu'il est apte à bloquer le flux de fluide réfrigérant lorsqu'il est fermé. Une alternative peut être de disposer une vanne d'arrêt entre le deuxième dispositif de détente 11 et le premier point de raccordement 31.

Une autre alternative (non représentée) peut également être de disposer une vanne trois-voies au niveau du premier point de raccordement 31.

La première boucle de fluide réfrigérant A peut également comporter un clapet anti-retour 23 disposé en aval du deuxième échangeur de chaleur 13, entre ledit deuxième échangeur de chaleur 13 et le deuxième point de raccordement 32 afin d'éviter que du fluide réfrigérant issu de la première boucle de contournement 30 ne reflux vers le deuxième échangeur de chaleur 13.

Par vanne d'arrêt, clapet anti-retour, vanne trois-voies ou dispositif de détente avec fonction d'arrêt, on entend ici des éléments mécaniques ou électromécaniques pouvant être pilotés par une unité de commande électronique embarquée dans le véhicule automobile.

La première boucle de fluide réfrigérant A peut également comporter un premier échangeur de chaleur interne (non représenté) permettant un échange de chaleur entre le fluide réfrigérant à haute pression en sortie du premier échangeur de chaleur bifluide 5 et le fluide réfrigérant à basse pression en sortie du deuxième échangeur de chaleur 13 ou de la boucle de contournement 30. Ce premier échangeur de chaleur interne comporte notamment une entrée et une sortie de fluide réfrigérant à basse pression en provenance du deuxième point de raccordement 32, ainsi qu'une entrée et une sortie de fluide réfrigérant à haute pression en provenance du premier échangeur de chaleur bifluide 5.

Par fluide réfrigérant à haute pression, on entend par là un fluide réfrigérant ayant subi une augmentation de pression au niveau du compresseur 3 et n'ayant pas encore subi de perte de pression du fait d'un des dispositifs de détente. Par fluide réfrigérant à basse pression on entend par là un fluide réfrigérant ayant subi une perte de pression et à une pression proche de celle à l'entrée du compresseur 3.

La première boucle de fluide réfrigérant A peut en outre comporter également un deuxième échangeur de chaleur interne (non représenté) permettant un échange de chaleur entre le fluide réfrigérant à haute pression en sortie du premier échangeur de chaleur interne et le fluide réfrigérant à basse pression circulant dans la boucle de contournement 30. Ce deuxième échangeur de chaleur interne comporte notamment une entrée et une sortie de fluide réfrigérant à basse pression en provenance du premier point de raccordement 31, ainsi qu'une entrée et une sortie de fluide réfrigérant à haute pression en provenance du premier échangeur de chaleur interne. Comme illustré sur la figure 1 le deuxième échangeur de chaleur interne peut être disposé en aval de la première vanne d'arrêt 33.

Au moins un des premier ou deuxième échangeurs de chaleur interne peut être un échangeur de chaleur coaxial, c'est à dire comportant deux tubes coaxiaux et entre lesquels s'effectuent les échanges de chaleur.

De préférence, le premier échangeur de chaleur interne peut être un échangeur de chaleur interne coaxial d'une longueur comprise entre 50 et 120 mm alors que le deuxième échangeur de chaleur interne peut être un échangeur de chaleur interne coaxial d'une longueur comprise entre 200 et 700 mm.

La première boucle de fluide réfrigérant A peut également comporter une bouteille déshydratante 14 disposée en aval du premier échangeur de chaleur bifluide 5, plus précisément entre ledit premier échangeur de chaleur bifluide 5 et le premier dispositif de détente 7. Une telle bouteille déshydratante 14 disposée sur le côté haute pression du circuit de climatisation, c'est-à-dire en aval de l'échangeur de chaleur bifluide 5 et en amont d'un dispositif de détente, a un encombrement moindre ainsi qu'un coût réduit par rapport à d'autres solutions de séparation de phase comme un accumulateur qui serait disposé du côté basse pression du circuit de climatisation, c'est-à-dire en amont du compresseur 3, notamment en amont du premier échangeur de chaleur interne.

Les premier 7 et deuxième 11 dispositifs de détente peuvent être des détendeurs électroniques, c'est à dire dont la pression du fluide réfrigérant en sortie est contrôlée par un actionneur qui fixe la section d'ouverture du dispositif de détente, fixant ainsi la pression du fluide en sortie. Un tel détendeur électronique est notamment apte à laisser passer le fluide réfrigérant sans perte de pression lorsque ledit dispositif de détente est ouvert complètement.

Selon un mode de réalisation préféré, le premier dispositif de détente 7 est un détendeur électronique pilotable par une unité de contrôle intégrée au véhicule et le deuxième dispositif de détente 11 est un détendeur thermostatique.

Le deuxième dispositif de détente 11 peut être notamment un détendeur thermostatique intégrant une fonction d'arrêt. Dans ce cas, lesdits premier 7 et deuxième 11 dispositifs de détente peuvent être contournés par une conduite de dérivation A', comportant notamment une vanne d'arrêt 25, comme illustré sur la figure 2. Cette conduite de dérivation A' permet au fluide réfrigérant de contourner lesdits premier 7 et deuxième 11 dispositifs de détente sans qu'il subisse une perte de pression. De préférence, au moins le deuxième dispositif de détente 11 est un détendeur thermostatique comportant une conduite de dérivation A'. Le premier dispositif de détente 7 peut également comporter une fonction d'arrêt ou alors comporter une vanne d'arrêt en aval afin de bloquer ou non le passage du fluide réfrigérant.

La première boucle de fluide réfrigérant A comporte également une conduite de dérivation 80 du premier dispositif de détente 7 et du premier échangeur de chaleur 9. Cette conduite de dérivation 80 comporte un troisième dispositif de détente 12 disposé en amont d'un deuxième échangeur de chaleur bifluide 83. Ce deuxième échangeur de chaleur bifluide 83 est également agencé conjointement sur une boucle de gestion thermique secondaire. La boucle de gestion thermique secondaire peut plus particulièrement être une boucle dans laquelle circule un deuxième fluide caloporteur et reliée à des échangeurs de chaleur ou plaques froides au niveau de batteries et/ou d'éléments électroniques à refroidir.

Le troisième dispositif de détente 12 peut également comporter une fonction d'arrêt afin de permettre ou non au fluide réfrigérant de traverser la conduite de dérivation 80. Une alternative est de disposer une vanne d'arrêt sur conduite de dérivation 80, en amont du troisième dispositif de détente 12.

La conduite de dérivation 80 est connectée d'une part en amont du premier dispositif de détente 7. Cette connexion est réalisée au niveau d'un premier point de jonction 81 disposé en amont du premier dispositif de détente 7, entre le premier échangeur de chaleur bifluide 5 et ledit premier dispositif de détente 7.

La conduite de dérivation 80 est connectée d'autre part au niveau d'un deuxième point de jonction 82 disposé en amont du compresseur 3, entre le troisième échangeur de chaleur 13 et ledit compresseur 3. Sur la figure 1, le deuxième point de jonction 82 est disposé entre le deuxième point de raccordement 32 de la boucle de contournement 30 et le compresseur 3. Il est cependant tout à fait possible d'imaginer d'autres modes de réalisation par exemple sur la boucle de contournement 30 en aval de la première vanne d'arrêt 33.

La deuxième boucle de fluide caloporteur B peut comporter quant à elle :
∘ le premier échangeur de chaleur bifluide 5,
∘ une première conduite de circulation 50 du premier fluide caloporteur comportant un radiateur interne 54 destiné à être traversé par un flux d'air intérieur 100 au véhicule automobile, et reliant un premier point de connexion 61 disposé en aval du premier échangeur de chaleur bifluide 5 et un deuxième point de connexion 62 disposé en amont dudit premier échangeur de chaleur bifluide 5,
∘ une deuxième conduite de circulation 60 du premier fluide caloporteur comportant un radiateur externe 64 destiné à être traversé par un flux d'air extérieur 200 au véhicule automobile, et reliant le premier point de connexion 61 disposé en aval du premier échangeur de chaleur bifluide 5 et le deuxième point de connexion 62 disposé en amont dudit premier échangeur de chaleur bifluide 5, et
∘ une pompe 17 disposée en aval ou en amont du premier échangeur de chaleur bifluide 5, entre le premier point de connexion 61 et le deuxième point de connexion 62.

Le circuit de climatisation inversible indirecte 1 comporte au sein de la deuxième boucle de fluide caloporteur B un dispositif de redirection du premier fluide caloporteur en provenance du premier échangeur de chaleur bifluide 5 vers la première conduite de circulation 50 et/ou vers la deuxième conduite de circulation 60.

Comme illustré sur la figure 1, ledit dispositif de redirection du premier fluide caloporteur en provenance du premier échangeur de chaleur bifluide 5 peut notamment comporter une deuxième vanne d'arrêt 63 disposée sur la deuxième conduite de circulation 60 afin de bloquer ou non le premier fluide caloporteur et de l'empêcher de circuler dans ladite deuxième conduite de circulation 60.

Ce mode de réalisation permet notamment de limiter le nombre de vannes sur la deuxième boucle de fluide caloporteur B et permet ainsi de limiter les coûts de production.

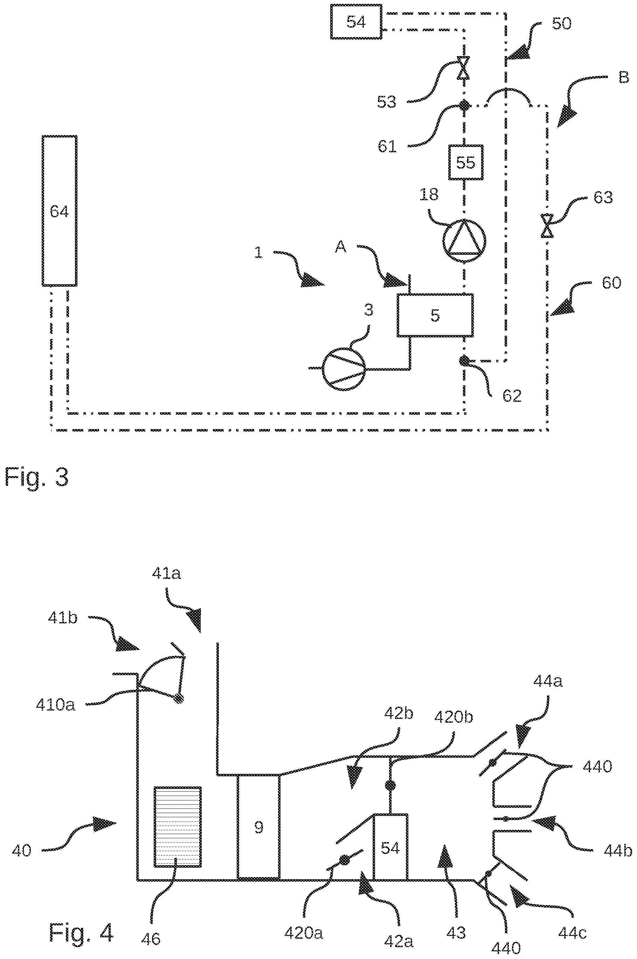

Selon un mode de réalisation alternatif illustré à la figure 3, représentant la deuxième boucle de fluide caloporteur B, le dispositif de redirection du premier fluide caloporteur en provenance du premier échangeur de chaleur bifluide 5 peut notamment comporter
- une deuxième vanne d'arrêt 63 disposée sur la deuxième conduite de circulation 60 afin de bloquer ou non le premier fluide caloporteur et de l'empêcher de circuler dans ladite deuxième conduite de circulation 60, et
- une troisième vanne d'arrêt 53 disposée sur la première conduite de circulation 50 afin de bloquer ou non le premier fluide caloporteur et l'empêcher de circuler dans ladite première conduite de circulation 50.

La deuxième boucle de fluide caloporteur B peut également comporter un élément électrique chauffant 55 du premier fluide caloporteur. Ledit élément électrique chauffant 55 est notamment disposé, dans le sens de circulation du premier fluide caloporteur, en aval du premier échangeur de chaleur bifluide 5, entre ledit premier échangeur de chaleur bifluide 5 et le premier point de jonction 61.

Le radiateur interne 54 ainsi que le premier échangeur de chaleur 9 sont plus particulièrement disposés au sein d'un dispositif de chauffage, ventilation et/ou climatisation 40. Comme illustré à la figure 4, le dispositif de chauffage, ventilation et/ou climatisation 40 peut comporter une conduite d'alimentation 41a en air extérieur et une conduite d'alimentation 41b en air recirculé (c'est-à-dire qui provient de l'habitacle). Ces deux conduites d'alimentation 41a et 41b amènent toutes deux l'air au niveau du premier échangeur de chaleur 9 afin qu'il le traverse. Afin de choisir d'où l'air traversant le premier échangeur de chaleur 9 provient, le dispositif de chauffage, ventilation et/ou climatisation 40 comporte un volet d'obturation 410a, par exemple un volet de type tambour, apte à refermer totalement ou partiellement la conduite d'alimentation 41a en air extérieur ou la conduite d'alimentation 41b en air recirculé.

En son sein, le dispositif de chauffage, ventilation et/ou climatisation 40 comporte une conduite de chauffage 42a qui permet d'amener de l'air étant passé par le premier échangeur de chaleur 9, au niveau du radiateur interne 54 afin qu'il le traverse et soit réchauffé avant d'arriver dans une chambre de distribution 43. Cette conduite de chauffage 42a comporte également un volet d'obturation 420a apte à la refermer totalement ou partiellement.

Le dispositif de chauffage, ventilation et/ou climatisation 40 peut comporter également une conduite de contournement 42b du radiateur externe 54. Cette conduite de contournement 42b permet à l'air étant passé par le premier échangeur de chaleur 9, d'aller directement dans la chambre de distribution 43, sans passer par le radiateur interne 54. Cette conduite de contournement 42b comporte également un volet d'obturation 420b apte à la refermer totalement ou partiellement.

Au niveau de la chambre de distribution 43 l'air peut être envoyé vers le parebrise par une conduite supérieure 44a, le tableau de bord de l'habitacle par une conduite médiane 44b et/ou vers le bas du tableau de bord de l'habitacle par une conduite inférieure 44c. Chacune de ces conduites 44a, 44b, 44c comportant un volet d'obturation 440 apte à les refermer totalement ou partiellement.

Le dispositif de chauffage, ventilation et/ou climatisation 40 comporte également un pulseur 46 afin de propulser le flux d'air interne 100. Ce pulseur 46 peut être disposé en amont du premier échangeur de chaleur 9 selon le sens de circulation du flux d'air intérieur 100.

Comme illustré sur la figure 1, le circuit de climatisation inversible indirect 1 comporte une unité centrale de contrôle 90 lui permettant de passer d'un mode de fonctionnement à un autre. L'unité centrale de contrôle 90 est notamment reliée à un capteur de température 72 du premier fluide caloporteur disposé en aval du premier échangeur de chaleur bifluide 5 et est apte à piloter la première vanne d'arrêt 33. Pour cela, l'unité centrale de contrôle 90 est reliée au dispositif de redirection du fluide réfrigérant. Si ledit dispositif de redirection du fluide réfrigérant comporte une première vanne d'arrêt 33, l'unité centrale de contrôle 90 commande son ouverture et sa fermeture ainsi que son amplitude d'ouverture s'il s'agit d'une vanne progressive.

L'unité centrale de contrôle 90 peut également être apte à piloter le dispositif de redirection du premier fluide caloporteur. Pour cela, l'unité centrale de contrôle 90 est reliée également à la deuxième vanne d'arrêt 63 et commande son ouverture et sa fermeture.

L'unité centrale de contrôle 90 peut également être reliée au compresseur 3 afin de commander le régime de ce dernier.

L'unité centrale de contrôle 90 peut également être reliée aux différents dispositifs de détente 7,11 et 12, afin de contrôler leur ouverture et ainsi définir la perte de pression que subit le fluide réfrigérant en les traversant, contrôler s'ils peuvent être traversés sans perte de pression ou s'ils bloquent le flux de fluide réfrigérant.

L'unité centrale de contrôle 90 peut également être reliée à différents capteurs mesurant différents paramètres du fluide réfrigérant ou alors d'un fluide caloporteur secondaire. Par fluide caloporteur secondaire, on entend ici un fluide caloporteur ayant échangé de l'énergie calorifique avec le fluide réfrigérant. Cela peut notamment être le premier fluide caloporteur, le deuxième fluide caloporteur, qui peuvent être tout les deux de l'eau glycolée, ou alors le flux d'air interne 100. Ces capteurs peuvent être par exemple :
- un capteur de pression 71 en sortie du compresseur 3,
- un capteur de la température 73 du flux d'air interne 100 en sortie du premier échangeur de chaleur 9,
- un capteur de la température 74 de l'air extérieur,
- un capteur de pression et de température 75 en entrée du compresseur 3 et
- un capteur de la température (non représenté) du deuxième fluide caloporteur au sein de la boucle de gestion thermique secondaire en sortie du deuxième échangeur de chaleur bifluide 83.

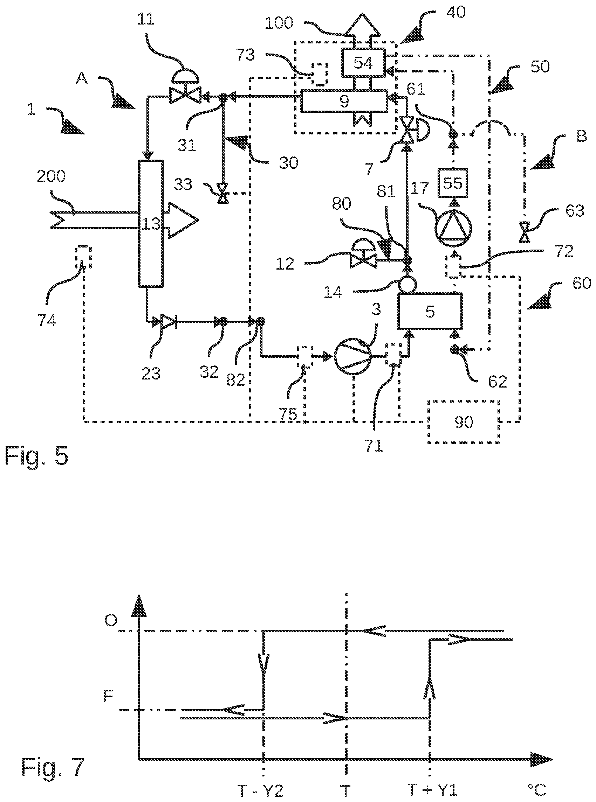

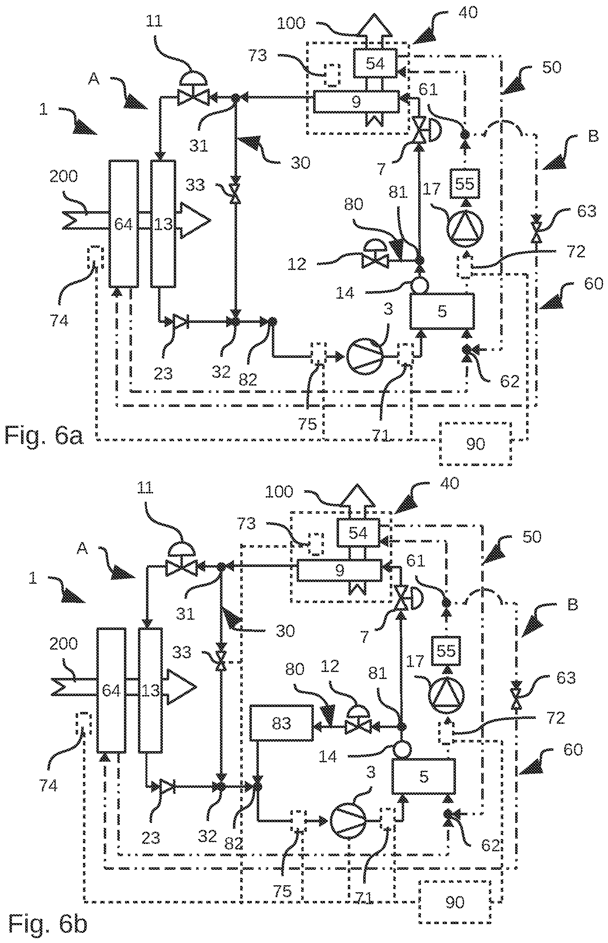

Le circuit de climatisation inversible indirect 1 décrit ci-dessus peut fonctionner selon différents modes de fonctionnement illustrés aux figures 5a, 5b, 6a et 6b. Sur ces figures, seuls les éléments et conduites dans lesquels circulent le fluide réfrigérant et le fluide caloporteur sont représentés.

### Mode de refroidissement :

Dans ce mode de fonctionnement, le flux d'air intérieur 100 est refroidi et l'énergie calorifique récupérée lors de ce refroidissement est relâchée dans le flux d'air externe 200.

Pour le circuit de climatisation inversible indirect 1 décrit notamment à la figure 1, le fluide réfrigérant passe successivement dans :
- le compresseur 3 dans lequel le fluide réfrigérant passe à haute pression,
- le premier échangeur de chaleur bifluide 5 dans lequel le fluide réfrigérant transmet de l'énergie calorifique au premier fluide caloporteur circulant dans la deuxième boucle de fluide caloporteur B,
- le premier dispositif de détente 7 dans lequel le fluide réfrigérant subit une perte de pression et passe à basse pression,
- le premier échangeur de chaleur 9 dans lequel le fluide réfrigérant récupère de l'énergie calorifique en refroidissant le flux d'air interne 100, et
- la boucle de contournement 30 avant de retourner au compresseur 3.

Afin que le fluide réfrigérant passe dans la boucle de contournement 30, le dispositif de redirection du fluide réfrigérant permet le passage du fluide réfrigérant dans la boucle de contournement 30. Pour cela, la première vanne d'arrêt 33 est ouverte et le deuxième dispositif de détente 11 est fermé afin de ne pas laisser passer le fluide réfrigérant.

Au niveau de la deuxième boucle de fluide caloporteur B, le premier fluide caloporteur relâche l'énergie calorifique obtenue au niveau du premier échangeur de chaleur bifluide 5 dans le flux d'air extérieur 200 au niveau du radiateur externe 64. Pour cela, la deuxième vanne d'arrêt 63 est ouverte. Le premier fluide caloporteur peut passer par le radiateur interne 54, cependant ce dernier n'est pas traversé par le flux d'air interne 100, par exemple en fermant le volet d'obturation 420a et en ouvrant le volet d'obturation 420b dans le dispositif de chauffage, ventilation et/ou climatisation 40.

Dans ce mode de refroidissement, si le troisième dispositif de détente 12 est ouvert, une partie du fluide réfrigérant à haute pression en sortie du premier échangeur de chaleur bifluide 5 passe dans la conduite de dérivation 80. En traversant le troisième dispositif de détente 12, ce fluide réfrigérant subit une perte de pression et passe à basse pression. Le fluide réfrigérant passe ensuite dans le deuxième échangeur de chaleur bifluide 83 et récupère de l'énergie calorifique en refroidissant le deuxième fluide caloporteur circulant dans la boucle de gestion thermique secondaire. Le fluide réfrigérant rejoint ensuite le compresseur 3. L'énergie calorifique récupérée de la boucle de gestion thermique secondaire est évacuée au niveau du radiateur externe 64.

### Mode de déshumidification simple :

Ce mode de déshumidification simple est un mode de fonctionnement dérivé du mode de refroidissement. Ce mode de déshumidification simple diffère du mode de refroidissement par le fait que le premier fluide caloporteur peut évacuer de l'énergie calorifique également au niveau du radiateur interne 54 dans le flux d'air intérieur 100.

Ainsi, au niveau de la première boucle de fluide réfrigérant A, le trajet du fluide réfrigérant est identique à celui du mode de refroidissement.

Au niveau de la deuxième boucle de fluide réfrigérant B, le flux d'air intérieur 100 qui traverse le radiateur interne 54 est réchauffé. Pour cela, par exemple, le volet d'obturation 420a est ouvert et le volet d'obturation 420b est fermé dans le dispositif de chauffage, ventilation et/ou climatisation 40.

Du fait du refroidissement du flux d'air intérieur 100 au niveau du premier échangeur de chaleur 9 qui permet la condensation de son humidité, puis de son réchauffage au niveau du radiateur interne 54, ledit flux d'air intérieur 100 est déshumidifié.

De même que précédemment, si le troisième dispositif de détente 12 est ouvert, une partie du fluide réfrigérant à haute pression en sortie du premier échangeur de chaleur bifluide 5 passe dans la conduite de dérivation 80. En traversant le troisième dispositif de détente 12 ce fluide réfrigérant subit une perte de pression et passe à basse pression. Le fluide réfrigérant passe ensuite dans le deuxième échangeur de chaleur bifluide 83 et récupère de l'énergie calorifique en refroidissant le deuxième fluide caloporteur circulant dans la boucle de gestion thermique secondaire. Le fluide réfrigérant rejoint ensuite le compresseur 3. L'énergie calorifique récupérée de la boucle de gestion thermique secondaire est évacuée au niveau du radiateur externe 64 et du radiateur interne 54.

### Mode pompe à chaleur :

La figure 5 montre un procédé de fonctionnement selon un mode pompe à chaleur dans lequel le flux d'air intérieur 100 est réchauffé, l'énergie calorifique réchauffant le flux d'air intérieur 100 étant récupérée du flux d'air extérieur 200.

Pour le circuit de climatisation inversible indirect 1 illustré à la figure 5a, le fluide réfrigérant passe successivement dans :
- le compresseur 3 dans lequel le fluide réfrigérant passe à haute pression,
- le premier échangeur de chaleur bifluide 5 dans lequel le fluide réfrigérant transmet de l'énergie calorifique au premier fluide caloporteur circulant dans la deuxième boucle de fluide caloporteur B,
- le premier dispositif de détente 7 dans lequel le fluide réfrigérant subit une première perte de pression et passe à une pression intermédiaire,
- le premier échangeur de chaleur 9 dans lequel le fluide réfrigérant rejette de l'énergie calorifique en réchauffant le flux d'air interne 100,
- le deuxième dispositif de détente 11 dans lequel le fluide réfrigérant subit une deuxième perte de pression et passe à basse pression, et
- le deuxième échangeur de chaleur 13 dans lequel le fluide récupère de l'énergie calorifique en refroidissant le flux d'air externe 200, avant de retourner au compresseur 3.

Afin que le fluide réfrigérant ne passe pas dans la boucle de contournement 30, le dispositif de redirection du fluide réfrigérant bloque le passage du fluide réfrigérant dans la boucle de contournement 30, par exemple en fermant la première vanne d'arrêt 33.

Au niveau de la deuxième boucle de fluide caloporteur B, le premier fluide caloporteur relâche l'énergie calorifique obtenue au niveau du premier échangeur de chaleur bifluide 5 dans le flux d'air interne 100 au niveau du radiateur interne 54. Au niveau du dispositif de chauffage, ventilation et/ou climatisation 40, le volet d'obturation 420a est ouvert et le volet d'obturation 420b est fermé.

Ce mode pompe à chaleur est utile pour réchauffer le flux d'air intérieur 100 à la fois au niveau du premier échangeur de chaleur 9 et du radiateur interne 54 en absorbant de l'énergie calorifique au flux d'air extérieur 200 au niveau du deuxième échangeur de chaleur 13.

De plus, l'élément électrique chauffant 55 peut être en fonctionnement afin de fournir un apport supplémentaire d'énergie calorifique au premier fluide caloporteur pour réchauffer le flux d'air intérieur 100.

### Mode de déshumidification totale :

Comme le montre la figure 6a, le mode de déshumidification totale est un dérivé du mode pompe à chaleur. Dans ce mode de déshumidification totale le premier échangeur de chaleur 9 ainsi que le deuxième échangeur de chaleur 13 sont utilisés simultanément. Le flux d'air intérieur 100 peut notamment être refroidi au niveau du premier échangeur de chaleur 9 pour arriver à une température de l'ordre de 3°C et ensuite réchauffé au niveau du radiateur interne 54 à une température de l'ordre de 41 à 43°C, avant d'arriver dans l'habitacle. Ce mode de déshumidification totale est notamment utilisé à une température extérieure comprise entre 0 et 12°C.

Ce mode de déshumidification totale diffère du mode pompe à chaleur par le fait que le fluide réfrigérant traverse le premier dispositif de détente 7 où il passe à basse pression et traverse le deuxième dispositif de détente 11 sans perte de pression.

Ainsi, au niveau de la première boucle de fluide réfrigérant A, le trajet du fluide réfrigérant est identique à celui du mode pompe à chaleur à la différence que le fluide réfrigérant ne subit qu'une seule perte de pression au niveau du premier dispositif de détente 7. Le fluide réfrigérant passe au travers du deuxième dispositif de détente 11 ou le contourne, sans perte de pression.

Le fluide réfrigérant passe ainsi successivement dans :
- le compresseur 3 dans lequel le fluide réfrigérant passe à haute pression,
- le premier échangeur de chaleur bifluide 5 dans lequel le fluide réfrigérant transmet de l'énergie calorifique au premier fluide caloporteur circulant dans la deuxième boucle de fluide caloporteur B,
- le premier dispositif de détente 7 dans lequel le fluide réfrigérant subit une perte de pression et passe à basse pression,
- le premier échangeur de chaleur 9 dans lequel le fluide réfrigérant récupère de l'énergie calorifique en refroidissant le flux d'air interne 100,
- le deuxième dispositif de détente 11 que le fluide réfrigérant traverse sans perte de pression, et
- le deuxième échangeur de chaleur 13 dans lequel le fluide récupère de l'énergie calorifique en refroidissant le flux d'air externe 200, avant de retourner au compresseur 3.

Au niveau de la deuxième boucle de fluide réfrigérant B, le volet d'obturation 310 est ouvert et si elle est présente, la troisième vanne d'arrêt 53 est ouverte de sorte que le fluide réfrigérant puisse échanger de l'énergie calorifique avec le flux d'air intérieur 100 qui traverse le troisième échangeur de chaleur 54. La troisième vanne d'arrêt 63 est également ouverte afin que le premier fluide caloporteur puisse également évacuer de la chaleur dans le flux d'air extérieur 200 au niveau du quatrième échangeur de chaleur 64.

Du fait du refroidissement du flux d'air intérieur 100 au niveau du premier échangeur de chaleur 9 qui permet la condensation de son humidité, puis de son réchauffage au niveau du troisième échangeur de chaleur 54, ledit flux d'air intérieur 100 est déshumidifié.

Au niveau de la deuxième boucle de fluide caloporteur B, le premier fluide caloporteur relâche l'énergie calorifique obtenue au niveau du premier échangeur de chaleur bifluide 5 dans le flux d'air interne 100 au niveau du radiateur interne 54. Au niveau du dispositif de chauffage, ventilation et/ou climatisation 40, le volet d'obturation 420a est ouvert et le volet d'obturation 420b est fermé.

Si le troisième dispositif de détente 12 est ouvert, une partie du fluide réfrigérant à haute pression en sortie du premier échangeur de chaleur bifluide 5 passe dans la conduite de dérivation 80. Ce cas de figure est illustré à la figure 6b. En traversant le troisième dispositif de détente 12 ce fluide réfrigérant subit une perte de pression et passe à basse pression. Le fluide réfrigérant passe ensuite dans le deuxième échangeur de chaleur bifluide 83 et récupère de l'énergie calorifique en refroidissant le deuxième fluide caloporteur circulant dans la boucle de gestion thermique secondaire. Le fluide réfrigérant rejoint ensuite le compresseur 3. L'énergie calorifique récupérée de la boucle de gestion thermique secondaire est évacuée au niveau du radiateur interne 54.

La présente invention concerne un procédé de gestion du circuit de climatisation inversible indirecte 1 lorsqu'il fonctionne en mode déshumidification totale.

Lorsque le circuit de climatisation indirect 1 est en mode déshumidification totale, l'unité centrale de contrôle 90 commande le dispositif de redirection du fluide réfrigérant de sorte que si la température mesurée au niveau du capteur de température 73 du flux d'air intérieur 100 est supérieure ou égale à T + Y1, le dispositif de redirection du fluide réfrigérant permet le passage du fluide réfrigérant dans la boucle de contournement 30. Ici, T est une valeur consigne de température du flux d'air intérieur 100 au niveau du capteur de température 73 et Y1 un différentiel de température compris entre 0 et 3 °C.

Si la température mesurée au niveau du capteur de température 73 du flux d'air intérieur 100 est inférieure ou égale à T - Y2, le dispositif de redirection du fluide réfrigérant empêche le passage du fluide réfrigérant dans la boucle de contournement 30. Ici, T est toujours une valeur consigne de température du flux d'air intérieur 100 au niveau du capteur de température 73 et Y2 un différentiel de température compris entre 0 et 3 °C.

On obtient ainsi un passage cyclique d'une partie du fluide réfrigérant dans la conduite de contournement 30. Cela est notamment illustré sur le diagramme de la figure 7 où l'on observe l'ouverture et la fermeture d'une première vanne d'arrêt 33 en fonction de la température mesurée au niveau du capteur de température 73 du flux d'air intérieur 100. Sur la figure 7, la légende F correspond à la fermeture de la première vanne d'arrêt 33 et la légende O à son ouverture.

Le fait de réaliser une telle gestion cyclique permet, si la température du flux d'air intérieur 100 est basse (inférieure ou égale à T - Y2), de rediriger tout ou partie du fluide réfrigérant vers le deuxième échangeur de chaleur 13 afin qu'il absorbe de l'énergie calorifique du flux d'air extérieur 200 afin d'augmenter la température du flux d'air intérieur 100.

Si la température du flux d'air intérieur 100 est élevée (supérieure ou égale à T + Yl), tout ou partie du fluide réfrigérant est redirigé dans la boucle de contournement 30 afin de diminuer la quantité d'énergie calorifique absorbée dans l'air extérieur et ainsi diminuer la température du flux d'air intérieur 100.

La valeur consigne de température du flux d'air intérieur 100 peut notamment être déterminée par des expérimentations en laboratoire et peut notamment être de l'ordre de 3°C en mode déshumidification totale.

L'unité centrale de contrôle 90 peut également déterminer le régime du compresseur 3 de sorte que la température mesurée du flux d'air intérieur 100 en sortie du premier échangeur de chaleur corresponde à la température consigne dudit flux d'air intérieur 100.

Selon une variante, lorsque le circuit de climatisation indirect inversible 1 comporte une conduite de dérivation 80 et que le fluide réfrigérant traverse ladite conduite de dérivation 80, l'unité centrale de contrôle 90 peut commander le dispositif de redirection du fluide réfrigérant en fonction de la température mesurée du flux d'air intérieur 100 en sortie du premier échangeur de chaleur 9 comme décrit ci-dessus. L'unité centrale de contrôle 90 détermine néanmoins le régime du compresseur 3 de sorte que la pression du fluide réfrigérant en sortie du premier échangeur de chaleur 9 corresponde à la température consigne du deuxième fluide caloporteur en sortie du deuxième échangeur de chaleur bifluide 83. Cette température consigne du deuxième fluide caloporteur peut notamment être déterminée par des expérimentations en laboratoire en fonction de la pression du fluide réfrigérant et de la température consigne du fluide réfrigérant en sortie du premier échangeur de chaleur 9.

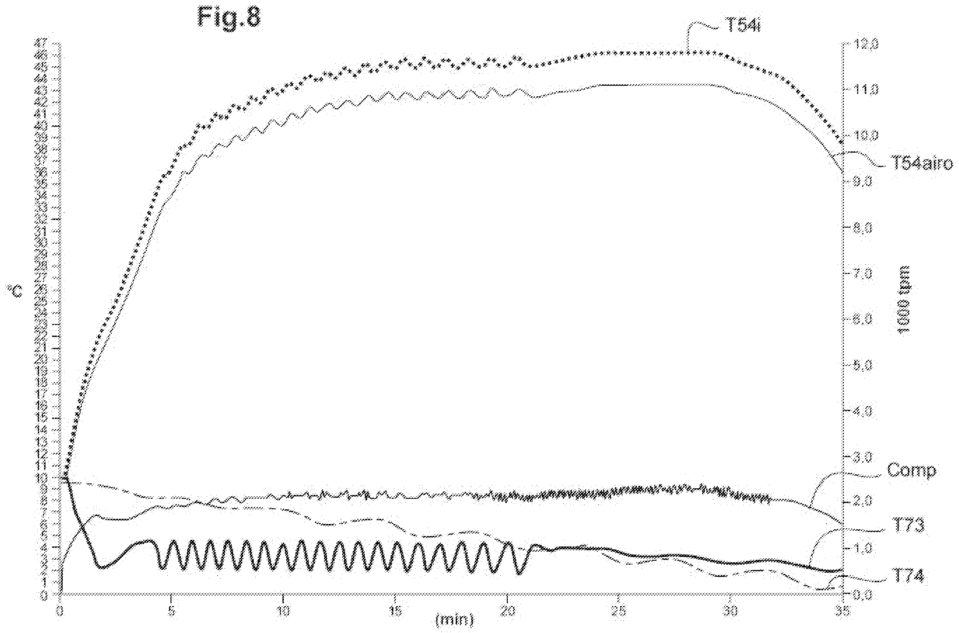

Le diagramme de la figure 8 montre la variation de divers paramètres du circuit de climatisation inversible indirect 1 en fonction du temps lors de son fonctionnement en mode déshumidification totale. Les paramètres expérimentaux de ce diagramme sont les suivants :
- un deuxième échangeur de chaleur bifluide 83 délivrant une puissance thermique de 2 kW (+/- 1kW) au fluide réfrigérant,
- une température extérieure illustrée par la courbe T74 passant de 10 à 0 °C,
- le fluide réfrigérant utilisé au sein de la première boucle de fluide réfrigérant A est du R1234yf,
- une température cible du flux d'air interne 100 en sortie du premier échangeur de chaleur 9 est de l'ordre de 3°,
- une température cible du flux d'air interne 100 en sortie du radiateur interne de l'ordre de 3°.

La courbe T73 correspond à l'évolution de la température du flux d'air interne 100 en sortie du premier échangeur de chaleur 9.

La courbe T54airo correspond à l'évolution de la température du flux d'air interne 100 en sortie du radiateur interne 54.

La courbe T54i correspond à l'évolution de la température du premier fluide caloporteur en entrée du radiateur interne 54.

La courbe Comp correspond à l'évolution du régime du compresseur 3.

La redirection du fluide réfrigérant vers le deuxième échangeur de chaleur 13 ou vers la conduite de contournement 30 est illustrée sur le diagramme de la figure 8 par les variations de température du flux d'air interne 100 en sortie du premier échangeur de chaleur 9, illustré par la courbe T73. Les pics de la courbe T73 correspondent ainsi à une redirection du fluide réfrigérant vers le deuxième échangeur de chaleur 13. Les creux correspondent quant à eux à une redirection du fluide réfrigérant vers la conduite de contournement 30.

La redirection du fluide réfrigérant vers le deuxième échangeur de chaleur 13 ou vers la conduite de contournement d'une partie du fluide réfrigérant permet ainsi de conserver une température du flux d'air interne 100 en sortie du premier échangeur de chaleur 9 (illustrée par la courbe T73) à une température de l'ordre de 3°C plus ou moins 1°C, ce qui est proche de la température cible. Cela permet également de maintenir une température du premier fluide caloporteur en entrée du radiateur interne 54 (illustrée par la courbe T54i) suffisamment élevée pour que le flux d'air intérieur 100 en sortie du radiateur interne 54 conserve une température moyenne (illustrée par la courbe T54airo) comprise entre 38 et 43°C.

La courbe Comp correspondant à l'évolution du régime du compresseur 3, montre de légères variations afin de maintenir une température du flux d'air interne 100 en sortie du premier échangeur de chaleur 9 (illustrée par la courbe T73) à une température de l'ordre de 3°C plus ou moins 1°C.

Ainsi, on voit bien que le procédé de gestion du circuit de climatisation inversible indirect 1 selon l'invention permet en mode déshumidification totale un maintien de la température du flux d'air interne 100 en sortie du premier échangeur de chaleur 9 à une température proche de la température consigne. Il n'y a donc pas d'emballement de cette température du flux d'air interne 100 du fait du deuxième échangeur de chaleur 13 ou du deuxième échangeur de chaleur bifluide 83 et donc la fonction de déshumidification dans ce mode déshumidification totale est conservée.

## Revendications

1. Procédé de gestion d'un circuit de climatisation indirect inversible (1) pour véhicule automobile comportant une première boucle de fluide réfrigérant (A) dans laquelle circule un fluide réfrigérant et comprenant un premier échangeur de chaleur bifluide (5) agencé conjointement sur la première boucle de fluide réfrigérant (A) et sur une deuxième boucle de fluide caloporteur (B) dans laquelle circule un premier fluide caloporteur, le premier échangeur de chaleur bifluide (5) étant disposé de façon à permettre les échanges de chaleur entre la première boucle de fluide réfrigérant (A) et la deuxième boucle de fluide caloporteur (B), la première boucle de fluide réfrigérant (A) comprenant :
• un compresseur (3),
• le premier échangeur de chaleur bifluide (5), disposé en aval dudit compresseur (3),
• un premier dispositif de détente (7),
• un premier échangeur de chaleur (9) étant destiné à être traversé par un flux d'air intérieur (100) au véhicule automobile,
• un deuxième dispositif de détente (11),
• un deuxième échangeur de chaleur (13) étant destiné à être traversé par un flux d'air extérieur (200) au véhicule automobile, et
• une boucle de contournement (30) du deuxième échangeur de chaleur (13),
• un dispositif de redirection du fluide réfrigérant en provenance du premier échangeur de chaleur (9) vers le deuxième échangeur de chaleur (13) ou vers la boucle de contournement (30),
ledit circuit comportant un capteur de température (73) du flux d'air intérieur (100) en sortie du premier échangeur de chaleur (9),
ledit circuit étant apte à fonctionner selon un mode de déshumidification totale dérivé d'un mode pompe à chaleur, dans lequel le flux d'air intérieur (100) est refroidi au niveau du premier échangeur de chaleur (9) puis réchauffé au niveau d'un radiateur interne (54) de la deuxième boucle de fluide caloporteur (B), avant d'arriver dans l'habitacle et dans lequel le premier (9) et le deuxième (13) échangeurs de chaleurs sont destinés à fonctionner simultanément,
**caractérisé en ce que** le circuit de climatisation inversible indirect (1) comporte une unité centrale de contrôle (90) relié audit capteur de température (73) du flux d'air intérieur (100) et apte à piloter le dispositif de redirection du fluide réfrigérant, lorsque le circuit de climatisation indirect (1) est en mode de déshumidification totale, l'unité centrale de contrôle (90) commande le dispositif de redirection du fluide réfrigérant de sorte que :
• si la température mesurée au niveau du capteur de température (73) du flux d'air intérieur (100) est supérieure ou égale à T + Y1, le dispositif de redirection du fluide réfrigérant permet le passage du fluide réfrigérant dans la boucle de contournement (30), dans lequel T est une valeur consigne de température du flux d'air intérieur (100) au niveau du capteur de température (73) et Y1 un différentiel de température compris entre 0 et 3 °C,
• si la température mesurée au niveau du capteur de température (73) du flux d'air intérieur (100) est inférieure ou égale à T - Y2, le dispositif de redirection du fluide réfrigérant empêche le passage du fluide réfrigérant dans la boucle de contournement (30), dans lequel T est une valeur consigne de température du flux d'air intérieur (100) au niveau du capteur de température (73) et Y2 un différentiel de température compris entre 0 et 3 °C.

2. Procédé de gestion selon la revendication précédente, **caractérisé en ce que** le dispositif de redirection du fluide réfrigérant comporte une première vanne d'arrêt (33) disposée sur la boucle de contournement (30).

3. Procédé de gestion selon la revendication 2, **caractérisé en ce que** la première vanne d'arrêt (33) est une vanne tout ou rien.

4. Procédé de gestion selon la revendication 2, **caractérisé en ce que** la première vanne d'arrêt (33) est une vanne proportionnelle.

5. Procédé de gestion selon l'une des revendications précédentes, **caractérisé en ce que** l'unité centrale de contrôle (90) détermine le régime du compresseur (3) de sorte que la température mesurée du flux d'air intérieur (100) en sortie du premier échangeur de chaleur (9) corresponde à la température consigne dudit flux d'air intérieur (100).

6. Procédé de gestion selon l'une des revendications précédentes, **caractérisé en ce que** la première boucle de fluide réfrigérant (A) comporte une conduite de dérivation (80) comportant un troisième dispositif de détente (12) disposé en amont d'un deuxième échangeur de chaleur bifluide (83), ledit deuxième échangeur de chaleur bifluide (83) étant également agencé conjointement sur une boucle de gestion thermique secondaire dans laquelle circule un deuxième fluide caloporteur, ladite boucle de dérivation (80) étant disposée entre un premier point de jonction (81) disposé en aval du premier échangeur de chaleur bifluide (5), entre ledit premier échangeur de chaleur bifluide (5) et le premier dispositif de détente (7) et un deuxième point de jonction (82) disposé en amont compresseur (3), entre le troisième échangeur de chaleur (13) et ledit compresseur (3).

7. Procédé de gestion selon la revendication précédente, **caractérisé en ce que**, lorsque le fluide réfrigérant traverse la conduite de dérivation (80), l'unité centrale de contrôle (90) commande le dispositif de redirection du fluide réfrigérant en fonction de la température mesurée du flux d'air intérieur (100) en sortie du premier échangeur de chaleur (9) et que l'unité centrale de contrôle (90) détermine le régime du compresseur (3) de sorte que la pression du fluide réfrigérant en sortie du premier échangeur de chaleur (9) corresponde à la température consigne du deuxième fluide caloporteur en sortie du deuxième échangeur de chaleur bifluide (83).

## Patentansprüche

1. Verfahren zur Steuerung eines umkehrbaren indirekten Klimaanlagenkreislaufs (1) für ein Kraftfahrzeug, umfassend eine erste Kältemittelfluidschleife (A), in der ein Kältemittelfluid zirkuliert und die einen ersten Doppelfluidwärmetauscher (5) beinhaltet, der sowohl in der ersten Kältemittelfluidschleife (A) als auch in einer zweiten Wärmeträgerfluidschleife (B), in der ein erstes Wärmeträgerfluid zirkuliert, eingerichtet ist, wobei der erste Doppelfluidwärmetauscher (5) so angeordnet ist, dass die Wärmeaustauschvorgänge zwischen der ersten Kältemittelfluidschleife (A) und der zweiten Wärmeträgerfluidschleife (B) ermöglicht werden,
wobei die erste Kältemittelfluidschleife (A) Folgendes beinhaltet:
• einen Kompressor (3),
• den ersten Doppelfluidwärmetauscher (5), der stromabwärts des Kompressors (3) angeordnet ist,
• eine erste Entspannungsvorrichtung (7),
• einen ersten Wärmetauscher (9), der dazu bestimmt ist, von einem Innenluftstrom (100) des Kraftfahrzeugs durchquert zu werden,
• eine zweite Entspannungsvorrichtung (11),
• einen zweiten Wärmetauscher (13), der dazu bestimmt ist, von einem Außenluftstrom (200) des Kraftfahrzeugs durchquert zu werden, und
• eine Schleife zur Umgehung (30) des zweiten Wärmetauschers (13),
• eine Vorrichtung zur Umleitung des von dem ersten Wärmetauscher (9) kommenden Kältemittelfluids zu dem zweiten Wärmetauscher (13) oder zu der Umgehungsschleife (30),
wobei der Kreislauf einen Temperatursensor (73) für den Innenluftstrom (100) am Ausgang des ersten Wärmetauschers (9) umfasst,
wobei der Kreislauf dazu in der Lage ist, gemäß einer Komplettentfeuchtungsbetriebsart, die von einer Wärmepumpenbetriebsart abgeleitet ist, zu arbeiten,
wobei der Innenluftstrom (100) in dem ersten Wärmetauscher (9) abgekühlt und dann in einem Innenradiator (54) der zweiten Wärmeträgerfluidschleife (B) erwärmt wird, bevor er den Fahrgastraum erreicht, und wobei der erste (9) und der zweite (13) Wärmetauscher dazu bestimmt sind, gleichzeitig zu arbeiten,
**dadurch gekennzeichnet, dass** der indirekte umkehrbare Klimaanlagenkreislauf (1) eine zentrale Steuereinheit (90) umfasst, die mit dem Temperatursensor (73) für den Innenluftstrom (100) verbunden ist und dazu in der Lage ist, die Vorrichtung zur Umleitung des Kältemittelfluids anzusteuern,
wobei, wenn sich der indirekte Klimaanlagenkreislauf (1) in der Komplettentfeuchtungsbetriebsart befindet, die zentrale Steuereinheit (90) die Vorrichtung zur Umleitung des Kältemittelfluids so steuert, dass:
• wenn die am Temperatursensor (73) gemessene Temperatur des Innenluftstroms (100) größer als oder gleich T + Y1 ist, die Vorrichtung zur Umleitung des Kältemittelfluids den Durchgang des Kältemittelfluids durch die Umgehungsschleife (30) ermöglicht, wobei T ein Temperatursollwert des Innenluftstroms (100) am Temperatursensor (73) ist und Y1 eine Temperaturdifferenz ist, die zwischen 0 und 3 °C liegt,
• wenn die am Temperatursensor (73) gemessene Temperatur des Innenluftstroms (100) kleiner als oder gleich T - Y2 ist, die Vorrichtung zur Umleitung des Kältemittelfluids den Durchgang des Kältemittelfluids durch die Umgehungsschleife (30) verhindert, wobei T ein Temperatursollwert des Innenluftstroms (100) am Temperatursensor (73) ist und Y2 eine Temperaturdifferenz ist, die zwischen 0 und 3 °C liegt.

2. Steuerungsverfahren nach dem vorhergehenden Anspruch, **dadurch gekennzeichnet, dass** die Vorrichtung zur Umleitung des Kältemittelfluids ein erstes Absperrventil (33) umfasst, das in der Umgehungsschleife (30) angeordnet ist.

3. Steuerungsverfahren nach Anspruch 2, **dadurch gekennzeichnet, dass** das erste Absperrventil (33) ein Auf/Zu-Ventil ist.

4. Steuerungsverfahren nach Anspruch 2, **dadurch gekennzeichnet, dass** das erste Absperrventil (33) ein Proportionalventil ist.

5. Steuerungsverfahren nach einem der vorhergehenden Ansprüche, **dadurch gekennzeichnet, dass** die zentrale Steuereinheit (90) den Betrieb des Kompressors (3) so bestimmt, dass die am Ausgang des ersten Wärmetauschers (9) gemessene Temperatur des Innenluftstroms (100) der Solltemperatur des Innenluftstroms (100) entspricht.

6. Steuerungsverfahren nach einem der vorhergehenden Ansprüche, **dadurch gekennzeichnet, dass** die erste Kältemittelfluidschleife (A) eine Bypassleitung (80) umfasst, die eine dritte Entspannungsvorrichtung (12) umfasst, die stromaufwärts eines zweiten Doppelfluidwärmetauschers (83) angeordnet ist, wobei der zweite Doppelfluidwärmetauscher (83) ebenfalls zusätzlich in einer sekundären Wärmesteuerungsschleife, in der ein zweites Wärmeträgerfluid zirkuliert, eingerichtet ist, wobei die Bypassschleife (80) zwischen einem ersten Verbindungspunkt (81), der stromabwärts des ersten Doppelfluidwärmetauschers (5) zwischen dem ersten Doppelfluidwärmetauscher (5) und der ersten Entspannungsvorrichtung (7) angeordnet ist, und einem zweiten Verbindungspunkt (82), der stromaufwärts des Kompressors (3) zwischen dem dritten Wärmetauscher (13) und dem Kompressor (3) angeordnet ist, angeordnet ist.

7. Steuerungsverfahren nach dem vorhergehenden Anspruch, **dadurch gekennzeichnet, dass**, wenn das Kältemittelfluid die Bypassleitung (80) durchquert, die zentrale Steuereinheit (90) die Vorrichtung zur Umleitung des Kältemittelfluids in Abhängigkeit von der am Ausgang des ersten Wärmetauschers (9) gemessenen Temperatur des Innenluftstroms (100) steuert und dass die zentrale Steuereinheit (90) den Betrieb des Kompressors (3) so bestimmt, dass der Druck des Kältemittelfluids am Ausgang des ersten Wärmetauschers (9) der Solltemperatur des zweiten Wärmeträgerfluids am Ausgang des zweiten Doppelfluidwärmetauschers (83) entspricht.

## Claims

1. Method for managing a reversible indirect air-conditioning circuit (1) for a motor vehicle comprising a first refrigerant loop (A) in which a refrigerant fluid circulates and comprising a first dual-fluid heat exchanger (5) arranged jointly on the first refrigerant loop (A) and on a second heat-transfer fluid loop (B) in which a first heat-transfer fluid circulates, the first dual-fluid heat exchanger (5) being disposed so as to allow the heat exchanges between the first refrigerant loop (A) and the second heat-transfer fluid loop (B), the first refrigerant loop (A) comprising:
• a compressor (3),
• the first dual-fluid heat exchanger (5), disposed downstream of said compressor (3),
• a first expansion device (7),
• a first heat exchanger (9) being intended to be passed through by a flow of air (100) internal to the motor vehicle,
• a second expansion device (11),
• a second heat exchanger (13) being intended to be passed through by a flow of air (200) external to the motor vehicle, and
• a bypass loop (30) of the second heat exchanger (13),
• a device for redirecting the coolant coming from the first heat exchanger (9) to the second heat exchanger (13) or to the bypass loop (30),
said circuit comprising a temperature sensor (73) for the flow of inside air (100) at the output of the first heat exchanger (9),
said circuit being able to operate according to a total dehumidification mode derived from a heat pump mode, in which the flow of inside air (100) is cooled at the first heat exchanger (9) then reheated at an internal radiator (54) of the second heat-transfer fluid loop (B), before arriving in the vehicle interior and in which the first (9) and the second (13) heat exchangers are intended to operate simultaneously,
**characterized in that** the indirect reversible air-conditioning circuit (1) comprises a central control unit (90) linked to said temperature sensor (73) for the flow of inside air (100) and capable of driving the device for redirecting the coolant,
when the indirect air-conditioning circuit (1) is in total dehumidification mode, the central control unit (90) controls the device for redirecting the coolant in such a way that:
• if the temperature measured at the temperature sensor (73) for the flow of inside air (100) is greater than or equal to T + Y1, the device for redirecting the coolant allows the passage of the coolant in the bypass loop (30), in which T is a temperature setpoint value of the flow of inside air (100) at the temperature sensor (73) and Y1 is a temperature differential lying between 0 and 3°C,
• if the temperature measured at the temperature sensor (73) for the flow of inside air (100) is less than or equal to T - Y2, the device for redirecting the coolant prevents the passage of the coolant in the bypass loop (30), in which T is a temperature setpoint value of the flow of inside air (100) at the temperature sensor (73) and Y2 is a temperature differential lying between 0 and 3°C.

2. Management method according to the preceding claim, **characterized in that** the device for redirecting the coolant comprises a first stop valve (33) disposed on the bypass loop (30).

3. Management method according to Claim 2, **characterized in that** the first stop valve (33) is an all or nothing valve.

4. Management method according to Claim 2, **characterized in that** the first stop valve (33) is a proportional valve.

5. Management method according to one of the preceding claims, **characterized in that** the central control unit (90) determines the speed of the compressor (3) in such a way that the measured temperature of the flow of inside air (100) at the output of the first heat exchanger (9) corresponds to the setpoint temperature of said flow of inside air (100).

6. Management method according to one of the preceding claims, **characterized in that** the first refrigerant loop (A) comprises a bypass line (80) comprising a third expansion device (12) disposed upstream of a second dual-fluid heat exchanger (83), said second dual-fluid heat exchanger (83) being also arranged jointly on a secondary thermal management loop in which a second heat-transfer fluid circulates, said bypass loop (80) being disposed between a first junction point (81) disposed downstream of the first dual-fluid heat exchanger (5), between said first dual-fluid heat exchanger (5) and the first expansion device (7) and a second junction point (82) disposed upstream of the compressor (3), between the third heat exchanger (13) and said compressor (3).

7. Management method according to the preceding claim, **characterized in that**, when the coolant passes through the bypass line (80), the central control unit (90) controls the device for redirecting the coolant as a function of the measured temperature of the flow of inside air (100) at the output of the first heat exchanger (9) and the central control unit (90) determines the speed of the compressor (3) in such a way that the pressure of the coolant at the output of the first heat exchanger (9) corresponds to the setpoint temperature of the second heat-transfer fluid at the output of the second dual-fluid heat exchanger (83).
